# EUROPEAN PATENT SPECIFICATION

(11) **EP 2 065 800 B1**
(45) Date of publication and mention of the grant of the patent: **04.04.2018**
(21) Application number: 08253790.3
(22) Date of filing: 21.11.2008
(51) Int. Cl.: G06F 21/57

(54) **Remote provisioning utilizing device identifier**
Fernbereitstellung, die Gerätekennungen nutzt
Fourniture à distance en utilisant un identificateur de dispositif

(30) Priority: 21.11.2007 US 943969
(43) Date of publication of application: 03.06.2009
(73) Proprietor: Intel Corporation, Santa Clara, CA 95054 (US)
(72) Inventor: Zimmer, Vincent J., Federal Way, Washington 98003 (US); Rothman, Michael A., Puyallup, Washington 98374 (US)
(74) Representative: Maiwald Patentanwalts GmbH

(56) References cited:
- WO-A-00/21238
- US-A- 5 349 643
- US-A1- 2005 149 924
- US-B1- 6 189 100

## Description

### Field

Embodiments of the present invention relate to the field of remote provisioning.

### Background

Integrating new servers into an enterprise network typically requires that an information technology (IT) technician manually plug in a boot device to the new servers and manipulate the new servers at local consoles. While this method of provisioning a server works reasonably well with a couple of servers, this requires significant resources in the integration of a large number of distributed servers.

Remote provisioning has been provided through procedures detailed in preboot execution environment (PXE) Version 2.1, Intel Corporation, published September 20, 1999 (hereinafter "PXE 2.1"). These procedures provide that a PXE boot server boots a PXE client over a network. PXE 2.1 procedures utilize unique identifying information of the PXE client, e.g., a globally unique identifier (GUID) and/or a universally unique identifier (UUID), so that a dynamic host configuration protocol (DHCP) may recognize the PXE client and provide the PXE client with an internet protocol (IP) address. The PXE client may then retrieve an operating system (OS) boot image from the PXE boot server. This process is usually performed in a closed network due to security concerns related to the integrity and authenticity of the OS boot image.
An example of remote provisioning of the kind just mentioned is described, for example, in United States Patent US-B1-6 189 100. This reference relates to a remote boot process that uses a secret shared between the client and server to sign and/or seal the data necessary to remotely boot the client from the server network to ensure the integrity of the data. Use is made of a private/public key pair for the client to replace the secret. A device identifier uniquely identifying the client computer is stored in the BIOS firmware of the client computer. When the client computer is powered up, the firmware broadcasts the unique device identifier to request a load application from a boot server. The boot server upon checking the unique device identity determines whether or not the client is a client for which it is responsible. The initialisation loader requests that the user of the client computer input credentials, such as a name and/or password, and presents the user credentials to the boot server to authenticate the legitimacy of the client. The boot server creates a machine account for the client computer in a directory service structure. The boot server generates a password for machine account, uses a one-way encryption algorithm and the machine account name to encrypt the password, creating the secret. The boot server then uses the user credentials to seal the message holding the secret and downloads the sealed message to the client computer. The client computer unseals the message and stores the secret in a secure location on its boot drive. The client computer sends a load request to the boot server. The boot server transfers a setup loader to the client computer. The setup loader converses with the security device on the boot server to log into a file transfer service on the boot server using the machine account name and the secret. When acknowledgement that the login has been authenticated is received, the setup loader issues read requests to download the boot files necessary to complete the boot process. Each read request is signed using the secret. The boot server seals the requested boot files and downloads them to the client computer. One of the boot files is the operating system kernel which is initiated by the setup loader to complete the boot process. The present invention provides a machine-accessible medium, an apparatus, and a method, all to facilitate remote provisioning by a remote provisioning server, as set out in the independent claims appended hereto. Notably, the apparatus, which is to be provisioned, possesses a device class identifier. This device class identifier is not unique to the apparatus but is indicative of a class of which the apparatus is a member.

### Brief Description of the Drawings

Embodiments of the present invention will be readily understood by the following detailed description in conjunction with the accompanying drawings. To facilitate this description, like reference numerals designate like structural elements. Embodiments of the invention are illustrated by way of example and not by way of limitation in the figures of the accompanying drawings.
**Figure 1** illustrates a remote provisioning environment in accordance with various embodiments of the present invention;
**Figure 2** is a flowchart illustrating operations of a PXE client in accordance with various embodiments of the present invention;
**Figure 3** is a flowchart illustrating operations of a PXE boot server in accordance with various embodiments of the present invention; and
**Figure 4** illustrates a computing device in accordance with various embodiments of this invention.

### Detailed Description

In the following detailed description, reference is made to the accompanying drawings which form a part hereof wherein like numerals designate like parts throughout, and in which is shown by way of illustration embodiments in which the invention may be practiced. It is to be understood that other embodiments may be utilized and structural or logical changes may be made without departing from the scope of the present invention. Therefore, the following detailed description is not to be taken in a limiting sense, and the scope of embodiments in accordance with the present invention is defined by the appended claims and their equivalents.

Various operations may be described as multiple discrete operations in turn, in a manner that may be helpful in understanding embodiments of the present invention; however, the order of description should not be construed to imply that these operations are order dependent.

For the purposes of the present invention, the phrase "A and/or B" means "(A), (B), or (A and B)." For the purposes of the present invention, the phrase "A, B, and/or C" means "(A), (B), (C), (A and B), (A and C), (B and C), or (A, B and C)."

The description may use the phrases "in an embodiment," or "in embodiments," which may each refer to one or more of the same or different embodiments. Furthermore, the terms "comprising," "including," "having," and the like, as used with respect to embodiments of the present invention, are synonymous.

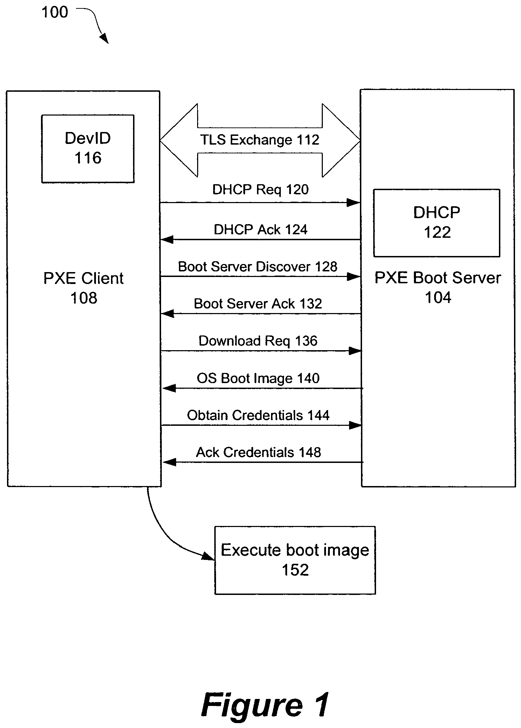

**FIG. 1** illustrates a remote provisioning environment, e.g., environment **100,** in accordance with various embodiments of the present invention. As used herein, "remote provisioning" may refer to a boot server, e.g., PXE boot server **104,** providing a client device, e.g., a PXE client **108,** with an OS boot image over a network connection. The client device **108** may be a server, a desktop computing device, a laptop computing device, a mobile computing device, etc. The "client" designation may simply refer to the role of the client device **108** in the provisioning procedure and does not otherwise restrict embodiments of the present invention.

The remote provisioning may be initiated with the PXE boot server **104** and the PXE client **108** engaging in a transport layer security (TLS) exchange **112.** The TLS exchange **112** may be a layer 2 exchange wherein the PXE client **108** provides the PXE boot server **104** with a device identifier (hereinafter "devID") **116** and the PXE boot server **104** authenticates an association of the devID **116** with the PXE client **108.** A layer 2 exchange may encapsulate transport layer information directly in data link layer, bypassing network layer services.

The devID **116** may generically identify the PXE client **108** as being a device of a class of devices. For example, the devID may indicate that the PXE client **108** is a server of a particular make and model. The PXE boot server **104** may have received information out of band (OOB), e.g., through an IT technician entering devlDs off of a bill of materials (or from a vendor's website, etc.), that may be used to verify that a client device involved in a remote provisioning procedure is indeed a device that is being integrated into a vendor's infrastructure. This verification may provide the foundation for building a secure association between the PXE boot server **104** and the PXE client **108** to allow an OS boot image to be passed to the PXE client **108** in a reliable manner.

The generic nature of the devID **116** may allay privacy concerns associated with transmission of a unique identifier (e.g., the GUID/UUID), which may disclose personally identifiable information (PII).

The devID **116** may be associated with the PXE client **108** at the manufacture of the PXE client **108** by being bound to the hardware of the PXE client **108.** In various embodiments the devID may reside in a processing unit, a chipset (e.g., a trusted platform module (TPM)), a network interface card (NIC), etc. The devID **116** may include a secret part and a public part. The public part may include various information about credentials of the devID **116,** e.g., version, serial number, signature, issuer, validity dates, public keys information, etc. The private part may include a cryptographically secure secret, anchored to the PXE client **108,** that may be used in various cryptographic operations. In various embodiments, the devID **116** may be compatible with definitions provided in the 802.1 ar standard titled "Secure Device Identity," which is currently being developed by the Institute of Electrical and Electronics Engineers (IEEE).

After the TLS exchange **112,** the PXE client **108** may request an IP address by issuing a DHCP request **120** to a DHCP server **122,** which may be part of the boot server **104** as shown, or a separate server in other embodiments. The DHCP server **122** may respond by providing an IP address in a DHCP acknowledgment message **124.**

While the TLS exchange **112** can be done after the IP address is procured, as a layer 3 exchange, doing it beforehand may avoid security vulnerabilities resulting from a compromised DHCP server.

After the PXE client **108** obtains an IP address, it may transmit a boot server discover message **128** to determine whether the PXE boot server **104** is available. When available, the PXE boot server **104** may respond with a boot server acknowledgment message **132.**

The PXE client **108** may request the OS boot loader in a download request **136.** The PXE boot server **104** may respond by transmitting an OS boot image **140.**

The PXE client **108** may request credentials from the PXE boot server **104** through an obtain credentials message **144.** The PXE boot server **104** may respond with an acknowledge credentials message **148.** The credentials from the PXE boot server **104** may be a signed manifest containing verification information for an indicated data object.

The PXE client **108,** having received the OS boot image and credentials may execute the boot image **152.**

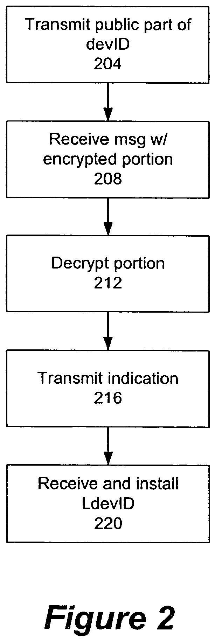

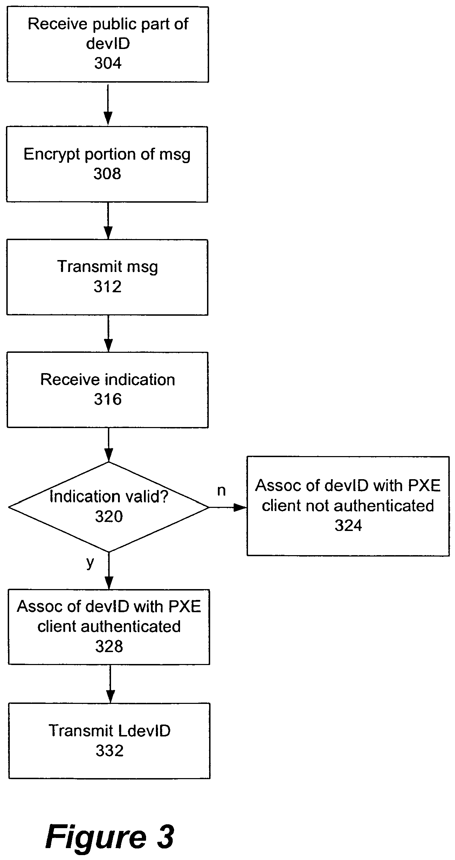

**Figures 2** and **3** are flowcharts respectively illustrating operations of the PXE client **108** and the PXE boot server **104** in the TLS exchange **112** in accordance with various embodiments. In block **204,** the PXE client **108** may initiate the TLS exchange **112** by transmitting the devID **116** to the PXE boot server **104.** In particular, and in accordance with an embodiment, the PXE client **108** may transmit a public part of the devID **116** to the PXE boot server **104.**

In block **304,** the PXE boot server **104** may receive the public part of the devID **116** and, in block **308,** use the public part of the devID **116** to encrypt at least a portion of a message transmitted to the PXE client **108** in block **312.** The encrypted portion of the message may sometimes be referred to as a challenge.

In block **208,** the PXE client **108** may receive the message and use a private part of the devID **116** to decrypt the encrypted portion in block **212.** The PXE client **108** may then transmit an indication of the successful decryption of the portion to the PXE boot server **104** in block **216.**

In block **316,** the PXE boot server **104** may receive the transmitted indication and determine whether it is valid in block **320.** The PXE boot server **104** may use a public key portion of the public part of the DevID to validate this transmitted indication.

If the indication is not valid, the PXE boot server **104** may not authenticate the association of the devID with the PXE client **108** in block **324.** If the indication is valid, the association may be authenticated in block **328** and the PXE boot server **104** may transmit a local devID (LdevID) in block **332.** An LdevID may be a unique ID that is enterprise specific.

In block **220,** the PXE client **108** may receive and install the LdevID. Once installed on the PXE client **108,** the LdevID may usurp the devID **116.** By providing the LdevID in this manner, the PXE boot server **104** may, in effect, remotely take ownership of the PXE client **108.**

In addition (or as an alternative) to determining whether the devID is properly associated with the PXE client **108,** the PXE boot server **104** may determine the validity of the devID **116** itself. This may be determined by referencing information transmitted directly in the public part of the devID **116,** e.g., validity time frame, and/or by OOB information, e.g., information on revocations, updates, etc., that apply to the devID **116.**

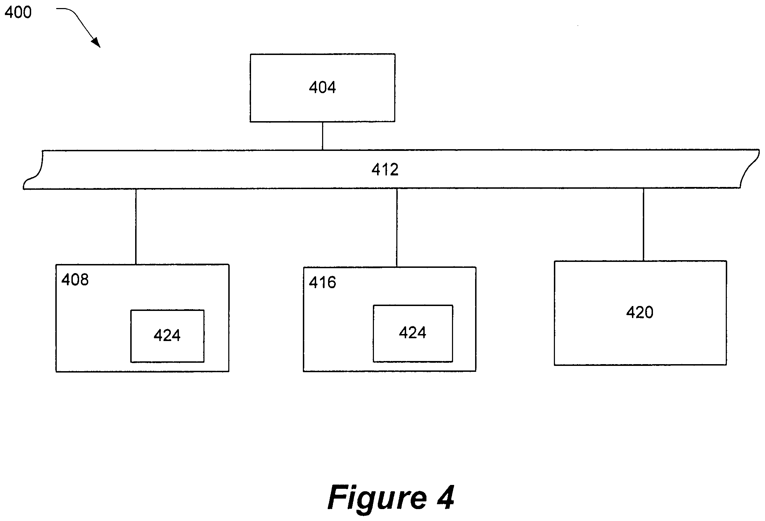

**Figure 4** illustrates a computing device **400** capable of implementing a PXE computing device in accordance with various embodiments. As illustrated, for the embodiments, computing device **400** includes processor **404,** memory **408,** and bus **412,** coupled to each other as shown. Additionally, computing device **400** includes storage **416,** and communication interfaces **420,** e.g., a wireless network interface card (WNIC), coupled to each other, and the earlier described elements as shown.

Memory **408** and storage **416** may include in particular, temporal and persistent copies of provisioning logic **424,** respectively. The provisioning logic **424** may include instructions that when executed by the processor **404** results in a provisioning agent being implemented that performs remote provisioning operations described in conjunction with various PXE devices, e.g., the PXE boot server and/or the PXE client, in accordance with embodiments of this invention. These remote provisioning operations include, but are not limited to, a PXE boot server remotely provisioning a PXE client with an OS boot image and a PXE client being remotely provisioned by a PXE boot server.

In various embodiments, the memory **408** may include RAM, dynamic RAM (DRAM), static RAM (SRAM), synchronous DRAM (SDRAM), dual-data rate RAM (DDRRAM), etc.

In various embodiments, the processor **404** may include one or more single-core processors, multiple-core processors, controllers, application-specific integrated circuits (ASICs), etc.

In various embodiments, storage **416** may be a machine-accessible medium that includes integrated and/or peripheral storage devices, such as, but not limited to, disks and associated drives (e.g., magnetic, optical), universal serial bus (USB) storage devices and associated ports, flash memory, read-only memory (ROM), nonvolatile semiconductor devices, etc.

In various embodiments, storage **416** may be a storage resource physically part of the computing device **400** or it may be accessible by, but not necessarily a part of, the computing device **400.** For example, the storage **416** may be accessed by the computing device **400** over a network.

In various embodiments, computing device **400** may have more or less components, and/or different architectures.

Although certain embodiments have been illustrated and described herein for purposes of description of the preferred embodiment, it will be appreciated by those of ordinary skill in the art that a wide variety of alternate and/or equivalent embodiments or implementations calculated to achieve the same purposes may be substituted for the embodiments shown and described without departing from the scope of the present invention. This application is intended to cover any adaptations or variations of the embodiments discussed herein. Therefore, it is manifestly intended that embodiments in accordance with the present invention be limited only by the claims and the equivalents thereof.

## Claims

1. A machine-accessible medium having associated instructions that, when executed, results in a device (108), in a pre-boot execution environment, cause the device (108) to boot with a remote boot image,
wherein at execution time, the device (108) has a first device identifier that generically identifies the device (108) as being one of a class of devices without uniquely identifying the device (108) within an enterprise, wherein the first device identifier includes a secret portion and a public portion; wherein to boot the device (108) with the remote boot image includes transmission of a request to a provisioning server (104) for an internet protocol address "IP" in accordance with a dynamic host configuration protocol "DHCP" and performance of a transport layer security "TLS" exchange with the provisioning server (104) to obtain a second device identifier that uniquely identifies the device (108) within the enterprise, prior to transmission of the request for the IP address; and wherein to perform the TLS exchange, the device (108) is caused to:
transmit to the provisioning server (104), the public portion of the first device identifier, wherein the first device identifier is to be used to verify that the device (108) is of a class of devices that is to be integrated into the enterprise;
receive, from the provisioning server (104), a message that includes a portion encrypted by the provisioning server (104) by using the public portion of the first device identifier;
decrypt the portion of the message by using the secret portion of the first identifier; transmit, to the provisioning server (104), an indication that the portion was successfully decrypted to authenticate an association of the device identifier with the device (108);
receive, from the provisioning server (104), upon successful authentication of the association a second device identifier that uniquely identifies the device (108) within the enterprise; and install the second device identifier on the device (108), to usurp the first device identifier.

2. The machine-accessible medium of claim 1, wherein the device identifier is associated with the device (108) when the device (108) is manufactured.

3. The machine-accessible medium of claim 1, wherein the associated instructions, when executed, further result in the device (108):
wherein the DHCP request is transmitted, to the provisioning server (104), after successful completion of the TLS exchange

4. An apparatus comprising:
a processor;
a communication interface configured to communicatively couple the apparatus to a network; and
a provisioning logic (424) to be executed by the processor, in a pre-boot environment, to boot the apparatus with a remote boot image, wherein at execution time, the apparatus has a first device identifier that generically identifies the apparatus as being one of a class of apparatus without uniquely identifying the apparatus within an enterprise, wherein the first device identifier includes a secret portion and a public portion; wherein to boot the apparatus with the remote boot image includes transmission of a request to a provisioning server (104) for an internet protocol address "IP" in accordance with a dynamic host configuration protocol "DHCP" and performance of a transport layer security "TLS" exchange with the provisioning server (104) to obtain a second device identifier that uniquely identifies the apparatus within the enterprise, prior to transmission of the request for the IP address; and wherein to perform the TLS exchange, the provision logic (424) is to cause the apparatus to:
provide the public portion of the first apparatus identifier to the provisioning logic (424), via the communication interface, wherein the provisioning logic is to verify that the apparatus is one of a class of apparatuses that is to be integrated into an enterprise; receive, from the provisioning logic (424), a message having a portion encrypted by the provisioning logic as an authentication by using the public portion of the first device identifier; decrypt the portion of the message by using the secret portion of the first identifier; transmit, to the provisioning logic, an indication that the portion of the message was successfully decrypted to authenticate an association of the apparatus identifier with the apparatus; receive, upon successful authentication of the association, a second device identifier that uniquely identifies the apparatus within the enterprise; and install the second device identifier on the device (108), to usurp the first device identifier.

5. The apparatus of claim 4, wherein the first device identifier is associated with the apparatus when the apparatus is manufactured; and/or generically identifies the apparatus as being one of a class of apparatuses.

6. A method for booting a device (108) with a remote boot image, wherein at execution time, the device (108) has a first device identifier that generically identifies the device (108) as being one of a class of devices without uniquely identifying the device (108) within an enterprise, wherein the first device identifier includes a secret portion and a public portion; wherein booting the device (108) with the remote boot image includes transmitting a request to a provisioning server (104) for an internet protocol address "IP" in accordance with a dynamic host configuration protocol "DHCP" and performing a transport layer security "TLS" exchange with the provisioning server (104) to obtain a second device identifier that uniquely identifies the device (108) within the enterprise, prior to transmission of the request for the IP address; and wherein to perform the TLS exchange, the device (108) performs the following steps:
- transmitting to the provisioning server (104), the public portion of the first device identifier, wherein the first device identifier is to be used to verify that the device (108) is of a class of devices that is to be integrated into the enterprise;
- receiving, from the provisioning server (104), a message that includes a portion encrypted by the provisioning server (104) by using the public portion of the first device identifier;
- decrypting the portion of the message by using the secret portion of the first identifier;
- transmitting, to the provisioning server (104), an indication that the portion was successfully decrypted to authenticate an association of the device identifier with the device (108);
- receiving, from the provisioning server (104), upon successful authentication of the association a second device identifier that uniquely identifies the device (108) within the enterprise; and
- installing the second device identifier on the device (108), to usurp the first device identifier.

7. The method of claim 6, wherein the public key portion is distributed via a vendor's website and/or a bill of material.

## Patentansprüche

1. Maschinenzugängliches Medium, das zugeordnete Anweisungen aufweist, die, wenn sie ausgeführt werden, in einem Gerät (108) dazu führen, in einer Vorausführungsumgebung, das Gerät (108) dazu veranlassen, mit einem fernen Startabbild zu starten,
wobei zur Ausführungszeit das Gerät (108) eine erste Gerätekennung aufweist, die das Gerät (108) allgemein als eines aus einer Klasse von Geräten identifiziert, ohne das Gerät (108) innerhalb eines Unternehmens eindeutig zu identifizieren, wobei die erste Gerätekennung einen geheimen Teil und einen öffentlichen Teil aufweist;
wobei das Starten des Geräts (108) mit dem fernen Startabbild eine Übertragung einer Anfrage an einen Bereitstellungsserver (104) nach einer Internetprotokolladresse "IP" gemäß einem dynamischen Hostkonfigurationsprotokoll "DHCP" und Ausführung eines Transportschichtsicherheits "TLS" -Austauschs mit dem Bereitstellungsserver (104) aufweist, um eine zweite Gerätekennung zu erhalten, die das Gerät (108) innerhalb des Unternehmens vor der Übertragung der Anfrage nach der IP-Adresse eindeutig identifiziert; und wobei zur Ausführung des TLS-Austauschs das Gerät (108) veranlasst wird zum:
Übertragen des öffentlichen Teils der ersten Gerätekennung an den Bereitstellungsserver (104), wobei die erste Gerätekennung verwendet werden soll, um zu verifizieren, dass das Gerät (108) zu einer Klasse von Geräten gehört, die in das Unternehmen integriert werden soll;
Empfangen, von dem Bereitstellungsserver (104), einer Nachricht, die einen Teil aufweist, der unter Verwendung des öffentlichen Teils der ersten Gerätekennung durch den Bereitstellungsserver (104) verschlüsselt wurde;
Entschlüsseln des Teils der Nachricht unter Verwendung des geheimen Teils der ersten Kennung;
Übertragen, an den Bereitstellungsserver (104), eines Hinweises, dass der Teil erfolgreich entschlüsselt wurde, um eine Zuordnung der Gerätekennung zu dem Gerät (108) zu authentifizieren;
Empfangen, von dem Bereitstellungsserver (104), bei erfolgreicher Authentifizierung der Zuordnung, einer zweiten Gerätekennung, die das Gerät (108) eindeutig innerhalb des Unternehmens identifiziert; und
Installieren der zweiten Gerätekennung auf dem Gerät (108), um die erste Gerätekennung zu übernehmen.

2. Maschinenzugängliches Medium nach Anspruch 1, wobei die Gerätekennung dem Gerät (108) zugeordnet wird, wenn das Gerät (108) hergestellt wird.

3. Maschinenzugängliches Medium nach Anspruch 1, wobei die zugeordneten Anweisungen, wenn sie ausgeführt werden, in dem Gerät (108) ferner dazu führen:
wobei die DHCP-Anfrage an den Bereitstellungsserver (104) übertragen wird, nachdem der TLS-Austausch erfolgreich abgeschlossen wurde.

4. Vorrichtung, umfassend:
einen Prozessor;
eine Kommunikationsschnittstelle, die konfiguriert ist, um die Vorrichtung kommunikativ mit einem Netzwerk zu koppeln; und
eine Bereitstellungslogik (424), die von dem Prozessor in einer Vorausführungsumgebung ausgeführt wird, um die Vorrichtung mit einem fernen Startabbild zu starten, wobei zur Ausführungszeit die Vorrichtung eine erste Gerätekennung aufweist, die die Vorrichtung allgemein als eines aus einer Klasse von Vorrichtungen identifiziert, ohne die Vorrichtung innerhalb eines Unternehmens eindeutig zu identifizieren, wobei der erste Gerätekennung einen geheimen Teil und einen öffentlichen Teil aufweist;
wobei das Starten der Vorrichtung mit dem fernen Startabbild Übertragen einer Anfrage an einen Bereitstellungsserver (104) nach einer Internetprotokolladresse "IP" in Übereinstimmung mit einem dynamischen Hostkonfigurationsprotokoll "DHCP" und Ausführen eines Transportschichtsicherheit "TLS" -Austauschs mit dem Bereitstellungsserver (104), um eine zweite Gerätekennung zu erhalten, die die Vorrichtung innerhalb des Unternehmens vor der Übertragung der Anfrage nach der IP-Adresse eindeutig identifiziert, aufweist; und wobei, um den TLS-Austausch auszuführen, die Bereitstellungslogik (424) die Vorrichtung veranlasst zum:
Bereitstellen des öffentlichen Teils der ersten Vorrichtungskennung für die Bereitstellungslogik (424) über die Kommunikationsschnittstelle, wobei die Bereitstellungslogik verifizieren soll, dass die Vorrichtung eine aus einer Klasse von Vorrichtungen ist, die in ein Unternehmen integriert werden soll;
Empfangen einer Nachricht von der Bereitstellungslogik (424), die einen Teil aufweist, der durch die Bereitstellungslogik als eine Authentifizierung unter Verwendung des öffentlichen Teils der ersten Gerätekennung verschlüsselt wurde;
Entschlüsseln des Teils der Nachricht unter Verwendung des geheimen Teils der ersten Kennung;
Übertragen, an die Bereitstellungslogik, eines Hinweises, dass der Teil der Nachricht erfolgreich entschlüsselt wurde, um eine Zuordnung der Vorrichtungskennung zu der Vorrichtung zu authentifizieren;
Empfangen, nach erfolgreicher Authentifizierung der Zuordnung, einer zweiten Gerätekennung, die die Vorrichtung innerhalb des Unternehmens eindeutig identifiziert; und
Installieren der zweiten Gerätekennung auf dem Gerät (108), um die erste Gerätekennung zu übernehmen.

5. Vorrichtung nach Anspruch 4, wobei die erste Gerätekennung der Vorrichtung zugeordnet ist, wenn die Vorrichtung hergestellt ist; und/oder die Vorrichtung allgemein als eines aus einer Klasse von Vorrichtungen identifiziert.

6. Verfahren zum Starten eines Geräts (108) mit einem fernen Startabbild, wobei zur Ausführungszeit das Gerät (108) eine erste Gerätekennung aufweist, die das Gerät (108) allgemein als eines aus einer Klasse von Geräten identifiziert, ohne das Gerät (108) eindeutig innerhalb eines Unternehmens zu identifizieren, wobei die erste Gerätekennung einen geheimen Teil und einen öffentlichen Teil aufweist; wobei das Starten des Geräts (108) mit dem fernen Startabbild ein Übertragen einer Anfrage an einen Bereitstellungsserver (104) nach einer Internetprotokolladresse "IP" gemäß einem dynamischen Hostkonfigurationsprotokoll "DHCP" und Ausführen eines Transportschichtsicherheit "TLS" -Austauschs mit dem Bereitstellungsserver (104), um eine zweite Gerätekennung zu erhalten, die das Gerät (108) innerhalb des Unternehmens vor der Übertragung der Anfrage nach der IP-Adresse eindeutig identifiziert, aufweist; und wobei zur Ausführung des TLS-Austauschs das Gerät (108) die folgenden Schritte ausführt:
- Übertragen des öffentlichen Teils der ersten Gerätekennung an den Bereitstellungsserver (104), wobei die erste Gerätekennung verwendet werden soll, um zu verifizieren, dass das Gerät (108) zu einer Klasse von Geräten gehört, die in das Unternehmen integriert werden soll;
- Empfangen, von dem Bereitstellungsserver (104), einer Nachricht, die einen Teil aufweist, der durch den Bereitstellungsserver (104) unter Verwendung des öffentlichen Teils der ersten Gerätekennung verschlüsselt wurde;
- Entschlüsseln des Teils der Nachricht unter Verwendung des geheimen Teils der ersten Kennung;
- Übertragen, an den Bereitstellungsserver (104), eines Hinweises, dass der Teil erfolgreich entschlüsselt wurde, um eine Zuordnung der Gerätekennung zu dem Gerät (108) zu authentifizieren;
- Empfangen, von dem Bereitstellungsserver (104), einer zweiten Gerätekennung, die das Gerät (108) innerhalb des Unternehmens eindeutig identifiziert, bei erfolgreicher Authentifizierung der Zuordnung; und
- Installieren der zweiten Gerätekennung auf dem Gerät (108), um die erste Gerätekennung zu übernehmen.

7. Verfahren nach Anspruch 6, wobei der öffentliche Schlüsselteil über eine Website des Verkäufers und/oder eine Stückliste verteilt wird.

## Revendications

1. Support accessible par machine ayant des instructions associées qui, lorsqu'elles sont exécutées, aboutissent dans un dispositif (108), dans un environnement d'exécution de prédémarrage, amènent le dispositif (108) à démarrer avec une image éloignée de démarrage,
dans lequel à un temps d'exécution, le dispositif (108) a un premier identifiant de dispositif qui identifie de façon générique le dispositif (108) comme étant l'un d'une catégorie de dispositifs sans identifier exclusivement le dispositif (108) au sein d'une entreprise, dans lequel le premier identifiant de dispositif comporte une portion secrète et une portion publique ;
dans lequel le démarrage du dispositif (108) avec l'image éloignée de démarrage comporte une transmission d'une demande à un serveur de dimensionnement (104) d'une adresse de protocole Internet « IP » conformément à un protocole de configuration d'hôte dynamique « DHCP » et la performance d'un échange de sécurité de couche transport « TLS » avec le serveur de dimensionnement (104) pour obtenir un second identifiant de dispositif qui identifie exclusivement le dispositif (108) au sein de l'entreprise, avant transmission de la demande de l'adresse IP ; et dans lequel pour réaliser l'échange TLS, le dispositif (108) est amené à :
transmettre au serveur de dimensionnement (104), la portion publique du premier identifiant de dispositif, dans lequel le premier identifiant de dispositif doit être utilisé pour vérifier que le dispositif (108) appartient à une catégorie de dispositifs qui doit être intégrée dans l'entreprise ;
recevoir, en provenance du serveur de dimensionnement (104), un message qui comporte une portion chiffrée par le serveur de dimensionnement (104) en utilisant la portion publique du premier identifiant de dispositif ;
déchiffrer la portion du message en utilisant la portion secrète du premier identifiant ;
transmettre, au serveur de dimensionnement (104), une indication que la portion a été déchiffrée avec succès pour authentifier une association de l'identifiant de dispositif avec le dispositif (108) ;
recevoir, en provenance du serveur de dimensionnement (104), lors de l'authentification avec succès de l'association, un second identifiant de dispositif qui identifie exclusivement le dispositif (108) au sein de l'entreprise ; et
installer le second identifiant de dispositif sur le dispositif (108), pour usurper le premier identifiant de dispositif.

2. Support accessible par machine selon la revendication 1, dans lequel l'identifiant de dispositif est associé au dispositif (108) lorsque le dispositif (108) est fabriqué.

3. Support accessible par machine selon la revendication 1, dans lequel les instructions associées, lorsqu'elles sont exécutées, aboutissent en outre dans le dispositif (108) :
dans lequel la demande DHCP est transmise au serveur de dimensionnement (104), après achèvement avec succès de l'échange TLS.

4. Appareil comprenant :
un processeur ;
une interface de communication configurée pour coupler en communication l'appareil à un réseau ; et
une logique de dimensionnement (424) à exécuter par le processeur, dans un environnement de prédémarrage, pour démarrer l'appareil avec une image éloignée de démarrage, dans lequel à un temps d'exécution, l'appareil a un premier identifiant de dispositif qui identifie de façon générique l'appareil comme étant l'un d'une catégorie d'appareils sans identifier exclusivement l'appareil au sein d'une entreprise, dans lequel le premier identifiant de dispositif comporte une portion secrète et une portion publique ;
dans lequel le démarrage de l'appareil avec l'image éloignée de démarrage comporte la transmission d'une demande à un serveur de dimensionnement (104) d'une adresse de protocole Internet « IP » conformément à un protocole de configuration d'hôte dynamique « DHCP » et la performance d'un échange de sécurité de couche transport « TLS » avec le serveur de dimensionnement (104) pour obtenir un second identifiant de dispositif qui identifie exclusivement l'appareil au sein de l'entreprise, avant transmission de la demande de l'adresse IP ; et dans lequel pour réaliser l'échange TLS, la logique de dimensionnement (424) doit amener l'appareil à :
fournir la portion publique du premier identifiant d'appareil à la logique de dimensionnement (424), via l'interface de communication, dans lequel la logique de dimensionnement doit vérifier que l'appareil est l'un d'une catégorie d'appareils qui doit être intégrée dans une entreprise ;
recevoir, en provenance de la logique de dimensionnement (424), un message ayant une portion chiffrée par la logique de dimensionnement en tant qu'authentification en utilisant la portion publique du premier identifiant de dispositif ;
déchiffrer la portion du message en utilisant la portion secrète du premier identifiant ;
transmettre, à la logique de dimensionnement, une indication que la portion du message a été déchiffrée avec succès pour authentifier une association de l'identifiant d'appareil avec l'appareil ;
recevoir, lors de l'authentification avec succès de l'association, un second identifiant de dispositif qui identifie exclusivement l'appareil au sein de l'entreprise ; et
installer le second identifiant de dispositif sur le dispositif (108), pour usurper le premier identifiant de dispositif.

5. Appareil selon la revendication 4, dans lequel le premier identifiant de dispositif est associé à l'appareil lorsque l'appareil est fabriqué ; et/ou identifie de façon générique l'appareil comme étant l'un d'une catégorie d'appareils.

6. Procédé de démarrage d'un dispositif (108) avec une image éloignée de démarrage, dans lequel à un temps d'exécution, le dispositif (108) a un premier identifiant de dispositif qui identifie de façon générique le dispositif (108) comme étant l'un d'une catégorie de dispositifs sans identifier exclusivement le dispositif (108) au sein d'une entreprise, dans lequel le premier identifiant de dispositif comporte une portion secrète et une portion publique ; dans lequel le démarrage du dispositif (108) avec l'image éloignée de démarrage comporte la transmission d'une demande à un serveur de dimensionnement (104) d'une adresse de protocole Internet « IP » conformément à un protocole de configuration d'hôte dynamique « DHCP » et la réalisation d'un échange de sécurité de couche transport « TLS » avec le serveur de dimensionnement (104) pour obtenir un second identifiant de dispositif qui identifie exclusivement le dispositif (108) au sein de l'entreprise, avant transmission de la demande de l'adresse IP ; et dans lequel pour réaliser l'échange TLS, le dispositif (108) réalise les étapes suivantes :
- la transmission au serveur de dimensionnement (104), de la portion publique du premier identifiant de dispositif, dans lequel le premier identifiant de dispositif doit être utilisé pour vérifier que le dispositif (108) appartient à une classe de dispositifs qui doit être intégrée dans l'entreprise ;
- la réception, en provenance du serveur de dimensionnement (104), d'un message qui comporte une portion chiffrée par le serveur de dimensionnement (104) en utilisant la portion publique du premier identifiant de dispositif ;
- le déchiffrement de la portion du message en utilisant la portion secrète du premier identifiant ;
- la transmission, au serveur de dimensionnement (104), d'une indication que la portion a été déchiffrée avec succès pour authentifier une association de l'identifiant de dispositif avec le dispositif (108) ;
- la réception, en provenance du serveur de dimensionnement (104), lors de l'authentification avec succès de l'association, d'un second identifiant de dispositif qui identifie exclusivement le dispositif (108) au sein de l'entreprise ; et
- l'installation du second identifiant de dispositif sur le dispositif (108), pour usurper le premier identifiant de dispositif.

7. Procédé selon la revendication 6, dans lequel la portion de clé publique est distribuée via un site Web du vendeur et/ou une nomenclature.
